# EUROPEAN PATENT APPLICATION

(11) **EP 3 657 712 A1**
(43) Date of publication of application: **27.05.2020**
(21) Application number: 17918628.3
(22) Date of filing: 21.07.2017
(51) Int. Cl.: H04L 1/08, H04L 1/00, H04L 1/16

(54) **USER TERMINAL AND WIRELESS COMMUNICATION METHOD**

(71) Applicant: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); WANG, Lihui, Beijing 100190 (CN); HOU, Xiaolin, Beijing 100190 (CN)
(74) Representative: Hoffmann Eitle
(86) International application number: PCT/JP2017/026518
(87) International publication number: WO 2019/016952

(57) **Abstract**

Repeated transmission of a data signal is appropriately controlled. A user terminal according to the present invention includes: a transmission section that repeatedly transmits an Uplink (UL) data signal a given number of times; and a control section that controls repeated transmission of the UL data signal based on a Downlink (DL) signal generated based on a decoding result of the UL data signal.

## Description

### Technical Field

The present invention relates to a user terminal and a radio communication method of a next-generation mobile communication system.

### Background Art

In Universal Mobile Telecommunications System (UMTS) networks, for the purpose of higher data rates and lower latency, Long Term Evolution (LTE) has been specified (Non-Patent Literature 1). Furthermore, for the purpose of wider bands and a higher speed than those of LTE, LTE successor systems (also referred to as, for example, LTE Advanced (LTE-A), Future Radio Access (FRA), 4G, 5G, 5G+ (plus), New RAT (NR), and LTE Rel. 14 and 15~) have been also studied.

Furthermore, legacy LTE systems (e.g., LTE Rel. 8 to 13) perform communication on Downlink (DL) and/or Uplink (UL) in a subframe of 1 ms that is a transmission duration (scheduled duration) of one or more Transport Blocks (TBs). The subframe includes 14 symbols of 15 kHz in subcarrier-spacing in a case of, for example, a Normal Cyclic Prefix (NCP). The subframe is also referred to as a Transmission Time Interval (TTI).

Furthermore, the legacy LTE systems schedule a DL data signal (e.g., PDSCH: Physical Downlink Shared Channel) of a subframe #n by Downlink Control Information (DCI) (also referred to as a DL assignment) of the subframe #n. Transmission acknowledgement information (also referred to as, for example, Acknowledgement (ACK) and/or Negative ACK (NACK), A/N, or Hybrid Automatic Repeat reQuest (HARQ)-ACK) for the DL data signal is fed back from a user terminal to a radio base station at a given timing (also referred to as an HARQ-ACK timing or a feedback timing) subsequent to a subframe #n+4.

Furthermore, the legacy LTE systems schedule the UL data signal (e.g., PUSCH: Physical Uplink Shared Channel) of the subframe #n based on DCI (also referred to as a UL grant) to be transmitted at a given timing (also referred to as a scheduling timing or a PUSCH timing) prior to a subframe #n-4. HARQ-ACK for the UL data signal is fed back from the radio base station to the user terminal by using a Physical Hybrid-ARQ Indicator Channel (PHICH) at a given HARQ-ACK timing.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

### Summary of Invention

### Technical Problem

It has been studied for future radio communication systems (e.g., LTE Rel. 14 or subsequent releases, 5G or NR) to support repetition of transmission of a data signal. More specifically, it has been studied to repeat initial transmission of one or more identical Transport Blocks (TBs) K (K ≥ 1) times. In addition, a data signal may include a UL data signal (also referred to as, for example, a PUSCH, a UL data channel or UL data) and/or a DL data signal (also referred to as, for example, a PDSCH, a DL data channel or DL data).

There is a risk that, when the same HARQ-ACK timing and/or scheduling timing as those of the legacy LTE systems (e.g., LTE Rel. 8 to 13) that do not assume repetition of initial transmission of the identical TB are applied to these future radio communication systems, it is not possible to appropriately control repeated transmission of a data signal.

The present invention has been made in light of this point, and one of objects of the present invention to provide a user terminal and a radio communication method that can appropriately control repeated transmission of a data signal.

### Solution to Problem

One aspect of a user terminal according to the present invention includes: a transmission section that repeatedly transmits an Uplink (UL) data signal a given number of times; and a control section that controls repeated transmission of the UL data signal based on a Downlink (DL) signal generated based on a decoding result of the UL data signal.

### Advantageous Effects of Invention

According to the present invention, it is possible to appropriately control repeated transmission of a data signal.

### Brief Description of Drawings

Fig. 1 is a diagram illustrating one example of control of repeated transmission of a first type according to a first aspect.
Fig. 2 is a diagram illustrating one example of control of repeated transmission of a second type according to the first aspect.
Fig. 3 is a diagram illustrating one example of stop of repeated transmission according to the first aspect.
Fig. 4 is a diagram illustrating one example of control of repeated transmission of a first type according to a second aspect.
Fig. 5 is a diagram illustrating one example of control of repeated transmission of a second type according to the second aspect.
Figs. 6A and 6B are diagrams illustrating one example of control of repeated transmission of a first type according to a third aspect.
Figs. 7A and 7B are diagrams illustrating one example of control of repeated transmission of a second type according to the third aspect.
Figs. 8A and 8B are diagrams illustrating one example of decision on a repeated transmission type according to a fourth aspect.
Fig. 9 is a diagram illustrating one example of a schematic configuration of a radio communication system according to the present embodiment.
Fig. 10 is a diagram illustrating one example of an overall configuration of a radio base station according to the present embodiment.
Fig. 11 is a diagram illustrating one example of a function configuration of the radio base station according to the present embodiment.
Fig. 12 is a diagram illustrating one example of an overall configuration of a user terminal according to the present embodiment.
Fig. 13 is a diagram illustrating one example of a function configuration of the user terminal according to the present embodiment.
Fig. 14 is a diagram illustrating one example of hardware configurations of the radio base station and the user terminal according to the present embodiment.

### Description of Embodiments

It has been studied for future radio communication systems (e.g., LTE Rel. 14 or subsequent releases, 5G or NR) to support repetition of transmission of a data signal (e.g., a PUSCH and/or a PDSCH including a UL data signal and/or a DL data signal).

In this regard, repeated transmission refers to transmission of one or more identical Transport Blocks (TBs) in K or more contiguous time units (e.g., slots or mini slots). In addition, an identical or different Redundancy Version (RV) may be applied to the identical TB to be repeatedly transmitted. Furthermore, an identical or different modulation scheme and/or code rate (MCS: Modulation and Coding Scheme) may be applied to the identical TB.

There is a risk that, when the same HARQ-ACK timing and/or scheduling timing as those of legacy LTE systems (e.g., LTE Rel. 8 to 13) that do not assume repetition of initial transmission of an identical TB are applied to these future radio communication systems, it is not possible to appropriately control repeated transmission of a data signal (e.g., a PUSCH and/or a PDSCH). Hence, the inventors of this application have studied a method for appropriately controlling repeated transmission of a data signal (e.g., a PUSCH and/or a PDSCH), and have conceived the present invention.

More specifically, the inventors of this application have conceived controlling repeated transmission of a DL data signal based on DCI or the successfully decoded (and/or received) DL data signal (first aspect). Furthermore, the inventors of this application have conceived controlling repeated transmission of a UL data signal based on a DL signal generated based on a decoding result of the UL data signal to be repeatedly transmitted a given number of times (second and third aspects).

One embodiment of the present invention will be described in detail below with reference to the drawings. In addition, that the DL data signal and/or the UL data signal are "identical" described below means at least that TBs are identical, and the RV and/or the MCS may be different or identical.

Furthermore, "repeated transmission and/or repeated reception" of the DL data signal and/or the UL data signal mean that data whose TBs are at least identical is transmitted and/or received by a plurality of different radio resources (e.g., a plurality of different time resources), and the RV and/or the MCS may be different or identical during repetition.

Furthermore, a PDSCH and a PUSCH will be exemplified as a DL data signal and a UL data signal below. However, names of the DL data signal and the UL data signal are not limited to these, and may be any signal and/or channel for conveying higher layer control information and/or user data.

### (First Aspect)

According to the first aspect, repeated transmission of a PDSCH is controlled based on DCI or a successfully decoded (and/or received) PDSCH. More specifically, a user terminal may control an HARQ-ACK timing and/or an HARQ-ACK resource of the PDSCH based on the DCI or the successfully decoded (and/or received) PDSCH.

According to the first aspect, the user terminal is configured by higher layer signaling (e.g., RRC signaling) and/or instructed by physical layer signaling (e.g., DCI) to repeatedly transmit the PDSCH K times. More specifically, the number of times of repetition K of the PDSCH, and a start position of the PDSCH may be configured by higher layer signaling and/or physical layer signaling.

### <First Type>

According to the first type, the PDSCH is repeatedly transmitted the K times at the HARQ-ACK timing and/or by the HARQ-ACK resource (also abbreviated as an HARQ-ACK timing/resource below) indicated by the DCI, and then ACK or NACK is transmitted.

The DCI (e.g., the DCI for scheduling K times repeated transmission of the PDSCH) may indicate the HARQ-ACK timing/resource of the PDSCH. The user terminal may determine the HARQ-ACK timing/resource of the PDSCH to be repeatedly transmitted the K times based on instruction information included in the DCI.

In this regard, the HARQ-ACK timing is a time resource (e.g., a slot or a mini slot) used for transmission of HARQ-ACK. Furthermore, the HARQ-ACK resource may be at least one of a frequency resource (also referred to as, for example, a resource block (Physical Resource Block (PRB)) used for transmission of HARQ-ACK, a code resource (also referred to as, for example, a cyclic shift value and/or an orthogonal spreading code (OCC: Orthogonal Cover Code), and a space resource (e.g., beam index).

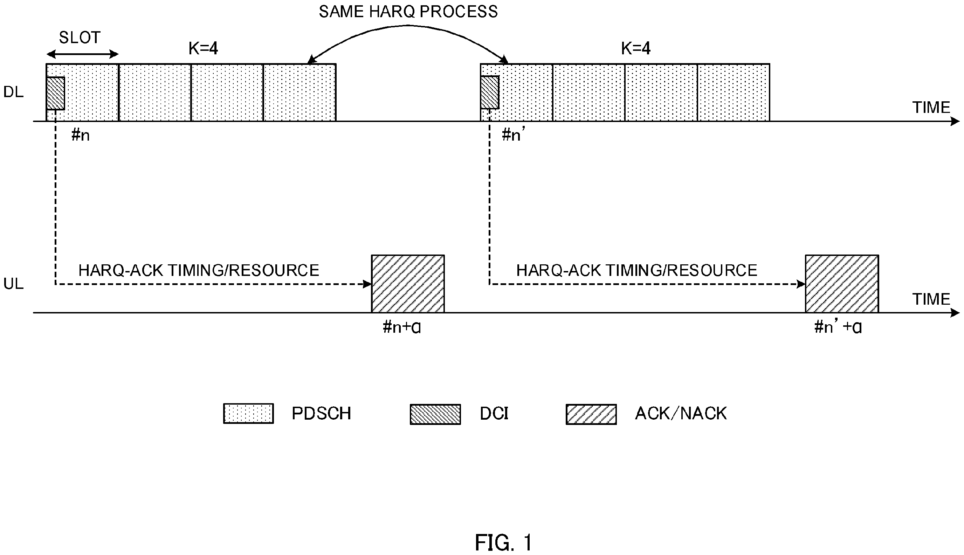

Fig. 1 is a diagram illustrating one example of control of repeated transmission of the first type according to the first aspect. Fig. 1 illustrates a case of K = 4, and assumes that an identical PDSCH is repeatedly transmitted in 4 contiguous slots. In, for example, Fig. 1, the user terminal receives in a slot #n DCI (also referred to as a DL assignment) for scheduling repeated transmission of the PDSCH. More specifically, the user terminal monitors DL control channel candidate resources (DL control channel candidates), and detects the DCI.

In this regard, the DCI may include at least one of, for example, information indicating a resource (e.g., PRB) to be allocated to repeated transmission, information indicating the number of times of repetition K, information indicating a start position in a time direction of the PDSCH, information indicating an HARQ Process Number (HPN), information indicating an RV, information indicating an MCS, and information (e.g., New Data Indicator (NDI)) indicating initial transmission or retransmission.

The user terminal receives and decodes the PDSCH that is repeatedly transmitted the K times in slots #n to #n+K (K = 4 in this case) based on the detected DCI. The user terminal may separately decode the PDSCHs received in the slots #n to #n+K, and synthesize and decode the PDSCHs received in the slots #n to #n+K.

The user terminal transmits ACK indicating that decoding of the PDSCHs has succeeded or NACK indicating that decoding of the PDSCHs has failed at an HARQ-ACK timing #n+α(α ≥ K) determined based on the detected DCI. The user terminal transmits Uplink Control Information (UCI) including the ACK or the NACK on a UL control channel (e.g., PUCCH: Physical Uplink Control Channel) or the PUSCH.

In addition, the HARQ-ACK timing may be determined based on the detected DCI as a symbol #m (m = 0 to Y-1 where Y is the number of symbols per slot) in the slot #n+α (α ≥ K). That is, the user terminal determines a specific symbol of a specific slot as the HARQ-ACK timing based on the detected DCI.

Furthermore, the HARQ-ACK timing may be determined based on the detected DCI as an mth symbol from a last symbol on which DCI or a downlink control channel resource (CORESET: control resource set) in which the DCI has been detected has been mapped. That is, the user terminal determines the specific symbol of the slot in which the DCI is detected as the HARQ-ACK timing based on the detected DCI.

Furthermore, when the PUCCH or the PUSCH for transmitting the HARQ-ACK is mapped over a plurality of symbols, the HARQ-ACK timing may be a transmission start timing of the PUCCH or the PUSCH for transmitting the HARQ-ACK.

A radio base station controls retransmission of repeated transmission of the PDSCH according to ACK or NACK from the user terminal. When, for example, receiving ACK from the user terminal, the radio base station can transmit in a slot #n' DCI for scheduling new data (initial transmission PDSCH) different from the data transmitted in the slot #n, and initially transmit new data in slots #n' to #n'+K. The DCI may include at least information indicating the HPN identical to that in the slot #n, and an NDI for deciding whether data is retransmitted or is new data. The NDI may notify whether the data is retransmitted or is the new data by a toggle (i.e., whether or not a value is the same as a previous value of the same HPN), yet is not limited to this. For example, the NDI may be a value (e.g., "0") indicating the retransmission data or a value (e.g., "1") indicating the new data.

On the other hand, when receiving NACK from the user terminal, the radio base station can transmit in the slot #n' the DCI for scheduling a retransmission PDSCH, and retransmit in the slots #n' to #n'+K DL data (PDSCH) identical to that in the slots #n to #n+K. The DCI may include at least information indicating the HPN identical to that in the slot #n, and the NDI (e.g., the NDI that is not toggled) indicating the retransmission data. In addition, an RV and/or an MCS different from those in the slots #n to #n+K may be applied to the PDSCHs to be retransmitted in the slots #n' to #n'+K.

According to the first type, after the K times repeated transmission using the HARQ-ACK timing/resource indicated by the DCI, ACK or NACK based on a decoding result of the PDSCHs that have been repeatedly transmitted the K times is collectively fed back. Consequently, the radio base station can appropriately control repeated transmission of the PDSCHs based on the ACK or the NACK.

In addition, the user terminal requires a given processing time until decoding is finished and HARQ-ACK is generated after receiving the PDSCHs. When the HARQ-ACK timing determined based on the DCI comes after the K times repeated transmission of the PDSCHs and is the given processing time or more, the user terminal transmits ACK or NACK based on the decoding result of the PDSCH.

On the other hand, when the HARQ-ACK timing/resource determined based on the DCI come after the K times repeated transmission of the PDSCHs and are less than the given processing time, the user terminal may not finish decoding processing of the PDSCHs by the HARQ-ACK timing. That is, the user terminal may not transmit ACK or NACK at the HARQ-ACK timing/resource. The given processing time may be reported in advance as terminal capability information from the user terminal to the radio base station.

### <Second Type>

According to the second type, when decoding of PDSCHs succeeds even during repeated transmission, ACK is transmitted at an HARQ-ACK timing/resource based on the PDSCHs.

The successfully decoded PDSCH in a certain slot may indicate the HARQ-ACK timing/resource of this PDSCH. The user terminal may determine the HARQ-ACK timing/resource of the PDSCH based on the correctly decoded PDSCH (e.g., based on a slot number of the correctly decoded PDSCH).

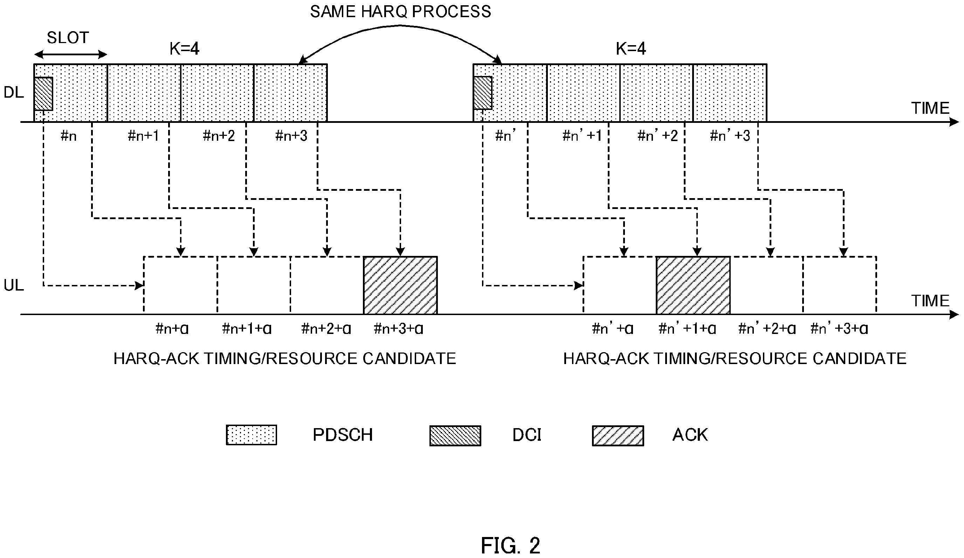

Fig. 2 is a diagram illustrating one example of control of repeated transmission of the second type according to the first aspect. Fig. 2 illustrates a case of K = 4, and assumes that an identical PDSCH is repeatedly transmitted in 4 contiguous slots. Differences from those in Fig. 1 will be mainly described below.

In, for example, Fig. 2, the user terminal receives in the slot #n DCI (also referred to as a DL assignment) for scheduling repeated transmission of a PDSCH. The DCI may include information (related information) related to the HARQ-ACK timing/resource.

The related information may include, for example, information (e.g., information indicating at least one of a frequency resource, a code resource and a space resource used for HARQ-ACK) indicating the HARQ-ACK timing/resource in a certain slot. In this case, by determining a slot for transmitting HARQ-ACK based on a slot in which decoding of the PDSCH has succeeded, it is possible to uniquely calculate the HARQ-ACK transmission timing/resource.

Alternatively, the related information includes information indicating, for example, HARQ-ACK timing/resource candidates in a specific slot, and which candidate among the candidates is determined as the HARQ-ACK timing/resource may be determined based on the slot in which decoding of the PDSCH has succeeded.

Alternatively, the related information includes information indicating HARQ-ACK timing/resource candidates in a plurality of slots, and which candidate among the candidates is determined as the HARQ-ACK timing/resource may be determined based on the slot in which decoding of the PDSCH has succeeded. The related information may be, for example, information indicating at least α in Fig. 2.

The user terminal starts receiving the PDSCH that is repeatedly transmitted the K (K = 4 in this case) times from the slot #n based on the detected DCI. In, for example, Fig. 2, the user terminal fails in decoding the PDSCHs in the slots #n to #n+2, and succeeds in decoding the PDSCH in the slot #n+3.

The user terminal determines the HARQ-ACK timing/resource based on the successfully decoded PDSCH. Furthermore, the user terminal may determine a slot #n+3+α as the HARQ-ACK timing based on the related information (e.g., the information indicating α in Fig. 2) included in the DCI, and the successfully decoded PDSCH (e.g., the slot #n+3 that is a timing of the successfully decoded PDSCH). Furthermore, the user terminal may determine the HARQ-ACK resource based on the related information and the PDSCH.

In addition, although the user terminal fails in decoding the PDSCHs in the slots #n to #n+2, the user terminal does not transmit NACK at HARQ-ACK timing candidates #n+α to #n+2+α matching the PDSCHs in the slots #n to #n+2. Thus, in Fig. 2, the user terminal transmits ACK at an HARQ-ACK timing (e.g., #n+3+α) matching the successfully decoded PDSCH, and does not transmit NACK at the HARQ-ACK timing matching the PDSCHs that have failed in being decoded. Hence, it is possible to prevent occurrence of an NACK-to-ACK error in the radio base station, and reduce an overhead of HARQ-ACK feedback per slot and terminal power consumption.

When receiving ACK from the user terminal, the radio base station transmits in the slot #n' DCI for scheduling an initial transmission PDSCH, and initially transmits the PDSCHs in slots #n' to #n'+K. The DCI may include at least one of information indicating the HPN identical to that in the slot #n, and the NDI (e.g., toggled NDI) indicating new data.

On the other hand, when not receiving ACK at an HARQ-ACK timing candidate (e.g., the slot #n+3+α in Fig. 2) matching a Kth PDSCH, the radio base station transmits in the slot #n' the DCI for scheduling a retransmission PDSCH, and retransmits in the slots #n' to #n'+K the PDSCH identical to that in the slots #n to #n+K. The DCI may include at least the information indicating the HPN identical to that in the slot #n, and the NDI (e.g., the NDI that is not toggled) indicating retransmission data. In addition, an RV and/or an MCS different from those in the slots #n to #n+K may be applied to the PDSCHs to be retransmitted in the slots #n' to #n'+K.

Furthermore, when receiving ACK from the user terminal before finishing K times repeated transmission of the PDSCH, the radio base station may stop repeated transmission of the PDSCH. This is because, once the user terminal transmits ACK matching the successfully decoded PDSCH (as long as a new PDSCH is not scheduled based on DCI in an identical HARQ process), the user terminal does not need to receive the PDSCH.

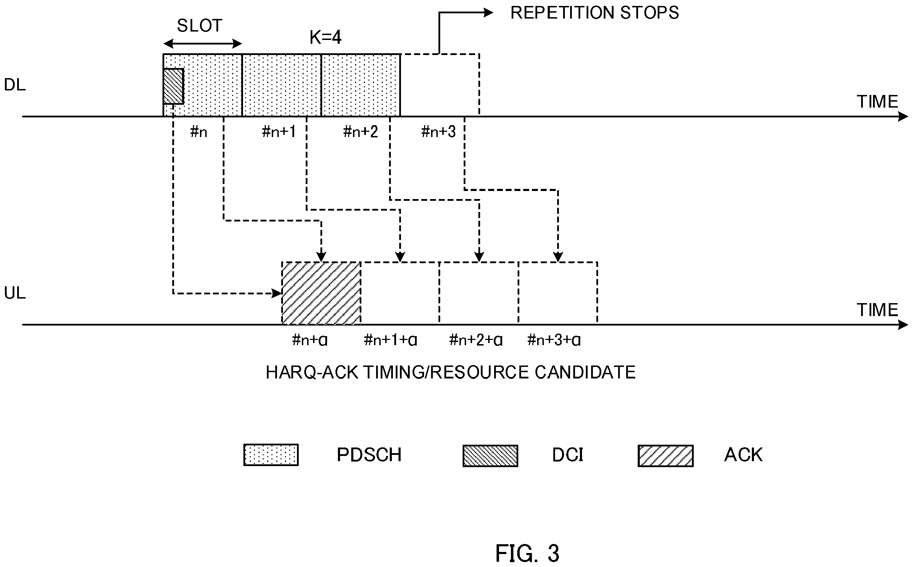

Fig. 3 is a diagram illustrating one example of stop of repeated transmission according to the first aspect. Differences from those in Fig. 2 will be mainly described with reference to Fig. 3. Fig. 3 illustrates a case of K = 4, and assumes that repeated transmission of PDSCHs in 4 slots is scheduled in the slot #n based on DCI.

In, for example, Fig. 3, the user terminal receives the PDSCH in the slot #n based on the DCI detected in the slot #n, and succeeds in decoding the PDSCH. The user terminal transmits ACK at an HARQ-ACK timing (the slot #n+a in this case) determined based on the PDSCH (and the related information included in the DCI).

In Fig. 3, the radio base station receives ACK from the user terminal during repeated transmission of the PDSCH (during transmission of the PDSCH in the slot #n+2), and therefore stops subsequent repeated transmission (repeated transmission of the PDSCH in the slot #n+3 in this case).

As described above, according to the second type, when decoding of the PDSCH succeeds even during repetition, ACK is transmitted at the HARQ-ACK timing based on the PDSCH. Consequently, it is possible to feed back ACK without waiting for an end of K times repeated transmission unlike the first type, and reduce feedback delay.

Furthermore, the radio base station stops subsequent repeated transmission in response to ACK from the user terminal, so that it is possible to reduce resource consumption caused by repeated transmission of the PDSCH that the user terminal has succeeded in decoding. When repeated transmission is stopped, resources for which subsequent repeated transmission has been scheduled can be used for transmission of different data.

### (Second Aspect)

According to the second aspect, when a PUSCH that is repeatedly transmitted a given number of times is scheduled based on DCI, a user terminal determines a timing and/or a resource at which the PUSCH is scheduled based on the DCI.

Furthermore, the user terminal controls repeated transmission of the PUSCH based on a DL signal generated based on a decoding result of the PUSCH. In this regard, the DL signal may be DCI including the HPN identical to that of the PUSCH and an NDI, or an ACK or NACK signal, information or a channel provided separately from the DCI.

According to the second aspect, the user terminal is configured by higher layer signaling (e.g., RRC signaling) and/or instructed by physical layer signaling (e.g., DCI) to repeatedly transmit the PUSCH K times. More specifically, the number of times of repetition K of the PUSCH and the start position of the PUSCH may be configured by the higher layer signaling and/or the physical layer signaling.

Furthermore, according to the second aspect, the DCI (also referred to as a UL grant) for scheduling K times repeated transmission of the PUSCH may indicate a timing and/or a resource (also referred to as a scheduling timing/resource or a PUSCH timing/resource) for scheduling the PUSCH. The user terminal may determine the scheduling timing/resource of the PUSCH based on instruction information included in the DCI.

In this regard, the scheduling timing (also referred to as a PUSCH timing) is a time resource (e.g., a slot or a mini slot) used to transmit the scheduled PUSCH. Furthermore, the resource (also referred to as a scheduling resource or a PUSCH resource) to be scheduled only needs to be at least one of a frequency resource (e.g., PRB) used to transmit the scheduled PUSCH, a code resource (also referred to as, for example, a cyclic shift value and/or an orthogonal spreading code (also referred to as an OCC)), and a space resource (e.g., beam index).

### <First Type>

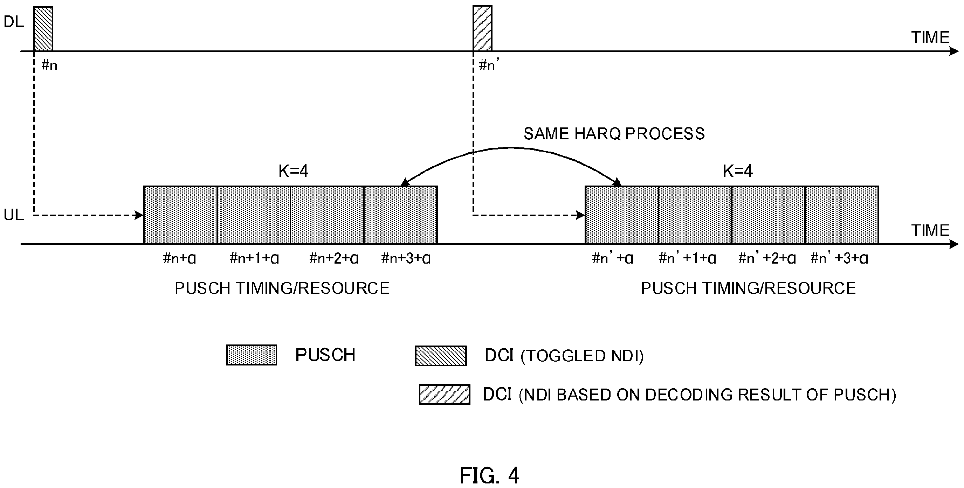

Fig. 4 is a diagram illustrating one example of control of repeated transmission of the first type according to the second aspect. Fig. 4 illustrates a case of K = 4, and assumes that the identical PUSCH is repeatedly transmitted in 4 contiguous slots. In, for example, Fig. 4, the user terminal receives in a slot #n the DCI for scheduling repeated transmission of the PUSCH. The DCI may include information indicating a scheduling timing/resource (PUSCH timing/resource) (e.g., information indicating α in Fig. 4, and/or information indicating at least one of the frequency resource, the code resource and the space resource used for the PUSCH).

The user terminal repeatedly transmits the PUSCH in K (K = 4 in this case) contiguous slots #n+a to #n+3+α based on the detected DCI. A radio base station receives and decodes the PUSCH that is repeatedly transmitted K (K = 4 in this case) times in the slots #n+α to #n+3+α. The radio base station may separately decode the PUSCHs received in the slots #n+α to #n+3+α or may synthesize and decode the PUSCHs received in the slots #n+α to #n+3+α.

When succeeding in decoding the PUSCHs, the radio base station schedules new data in the same HARQ process. More specifically, the radio base station may transmit in a slot #n' the DCI including the same HPN as that in the slot #n and an NDI indicating new data. The user terminal can recognize that the PUSCH that has been repeatedly transmitted in the slots #n+a to #n+3+α has been able to be correctly decoded by the radio base station based on the NDI indicating the new data (e.g., the NDI configured to a value different from that during previous transmission in the same HARQ process).

On the other hand, when failing in decoding the PUSCH, the radio base station reschedules the PUSCH identical to that in the slot #n in the same HARQ process. More specifically, the radio base station may transmit in a slot #n' the DCI including the same HPN as that in the slot #n and the NDI indicating retransmission data. The user terminal can recognize that the PUSCH that has been repeatedly transmitted in the slots #n+a to #n+3+α has not been correctly decoded by the radio base station based on the NDI (e.g., the NDI configured to a value identical to that during previous transmission in the same HARQ process) indicating the retransmission data.

Thus, in Fig. 4, the radio base station may generate the DCI including the NDI based on a decoding result of the PUSCH that has been repeatedly transmitted K times, and the user terminal may control retransmission of the PUSCH in the same HARQ process based on the NDI in the DCI.

According to the first type, the DCI including the NDI based on the decoding result of the PUSCH that has been repeatedly transmitted the K times is fed back from the radio base station to the user terminal. The user terminal can appropriately control repeated transmission of the PUSCH based on the NDI in the DCI.

In addition, the user terminal requires a given processing time until starting transmission of the PUSCH after receiving the DCI. When a PUSCH transmission start (e.g., first PUSCH transmission of the K times repeated transmission) timing determined based on the DCI is the given processing time or more after reception of the DCI, the user terminal transmits the PUSCH based on the DCI.

On the other hand, when the PUSCH transmission start timing determined based on the DCI is less than the given processing time after reception of the DCI, the user terminal may not start transmission processing of the PUSCH until the given processing time passes. That is, when part or entirety of the PUSCH that is repeatedly transmitted the K times comes before the given processing time passes, the user terminal may not transmit the part or the entirety of the PUSCH, and may transmit the subsequent PUSCH configured after the given processing time passes. The given processing time may be reported in advance as terminal capability information from the user terminal to the radio base station.

### <Second Type>

According to the second type, when the radio base station succeeds in decoding the PUSCH even while the user terminal repeatedly transmits the PUSCH, the radio base station transmits a DL signal (also referred to as a signal, information or a channel that will be also referred to as an ACK signal/information/channel below) indicating ACK of the PUSCH.

In this regard, the ACK signal/information/channel may be DCI for scheduling a new PUSCH in the same HARQ process (i.e., the DCI including an NDI indicating new data), or may be an ACK signal, a channel or information separately provided from the DCI. Furthermore, a timing for feedback of the ACK signal/information/channel (also referred to as a feedback timing or an HARQ-ACK timing) and/or a resource may be determined based on the successfully decoded PUSCH (e.g., a slot number of the PUSCH).

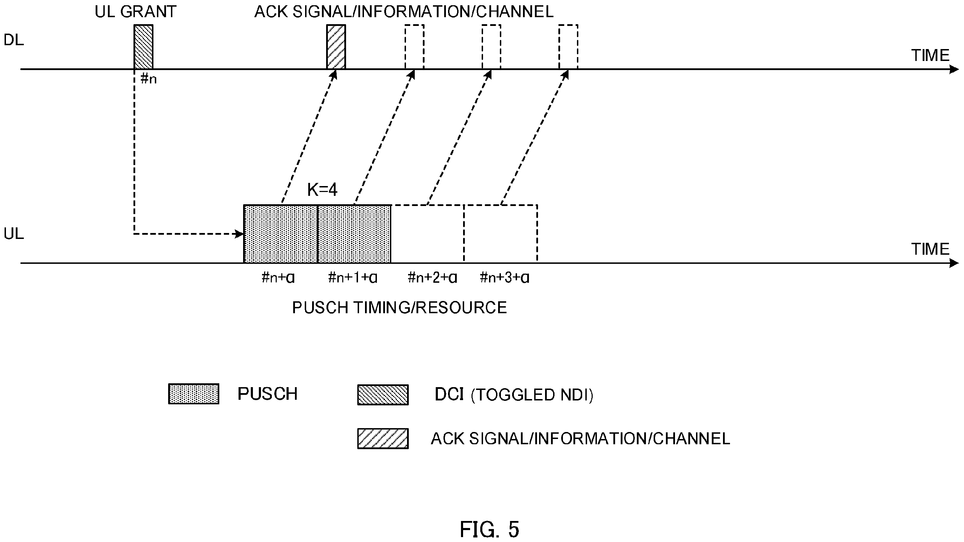

Fig. 5 is a diagram illustrating one example of control of repeated transmission of the second type according to the second aspect. Fig. 5 illustrates a case of K = 4, and assumes that an identical PUSCH is repeatedly transmitted in 4 contiguous slots. Differences from those in Fig. 4 will be mainly described below.

In, for example, Fig. 5, the user terminal receives in the slot #n the DCI (UL grant) for scheduling repeated transmission of the PUSCH. The DCI may include information indicating a scheduling timing/resource (e.g., information indicating α in Fig. 5, and/or information indicating at least one of the frequency resource, the code resource and the space resource used for transmission of the PUSCH). The user terminal starts repeatedly transmitting the PUSCH the K (K = 4) times in the K (K = 4 in this case) contiguous slots #n+a based on the detected DCI.

In Fig. 5, the radio base station succeeds in decoding the PUSCH in the intermediate slot #n+a of repeated transmission of the PUSCH, and therefore transmits the ACK signal/information/channel of the PUSCH. The feedback timing of the ACK signal/information/channel may be determined based on the PUSCH. Furthermore, when the DCI (UL grant) is used as the ACK signal/information/channel, the DCI may include the HPN identical to that in the slot #n, and the NDI indicating new data.

The user terminal stops subsequent repeated transmission (repeated transmission of the PUSCH in the slots #n+2+α and #n+3+α in this case) when receiving the ACK signal/information/channel from the base station during repeated transmission of the PUSCH (during transmission of the PUSCH in the slots #n+1+α).

In addition, even when failing in decoding the PUSCH in each of the slots #n+a to #n+3+α, the radio base station does not transmit a signal, information or a channel indicating NACK of the PUSCH. When the K times repeated transmission of the PUSCH is finished while the PUSCH cannot be correctly decoded, the radio base station may reschedule the PUSCH in the same HARQ process (i.e., may transmit the DCI including the same HPN and the NDI indicating the retransmission data).

Thus, the radio base station transmits only the ACK signal/information/channel of the successfully decoded PUSCH, so that it is possible to prevent occurrence of an NACK-to-ACK error in the user terminal, and reduce an overhead of feedback of the ACK signal/information/channel per slot.

As described above, according to the second type, when decoding of the PUSCHs succeeds even during repetition, the ACK signal/information/channel is transmitted at the feedback timing based on the PUSCHs. Consequently, it is possible to feed back the ACK signal/information/channel without waiting for the K times repeated transmission to end unlike the first type, and reduce feedback delay.

Furthermore, the user terminal stops subsequent repeated transmission according to the ACK signal/information/channel from the radio base station, so that it is possible to reduce resource consumption caused by repeated transmission of the PUSCH that the radio base station has succeeded in decoding.

### (Third Aspect)

The third aspect will describe a case where a PUSCH is repeatedly transmitted a given number of times without scheduling based on DCI. According to the third aspect, a user terminal controls repeated transmission of the PUSCH based on a DL signal generated based on a decoding result of the PUSCHs. Differences from those of the second aspect will be mainly described below.

### <First Type>

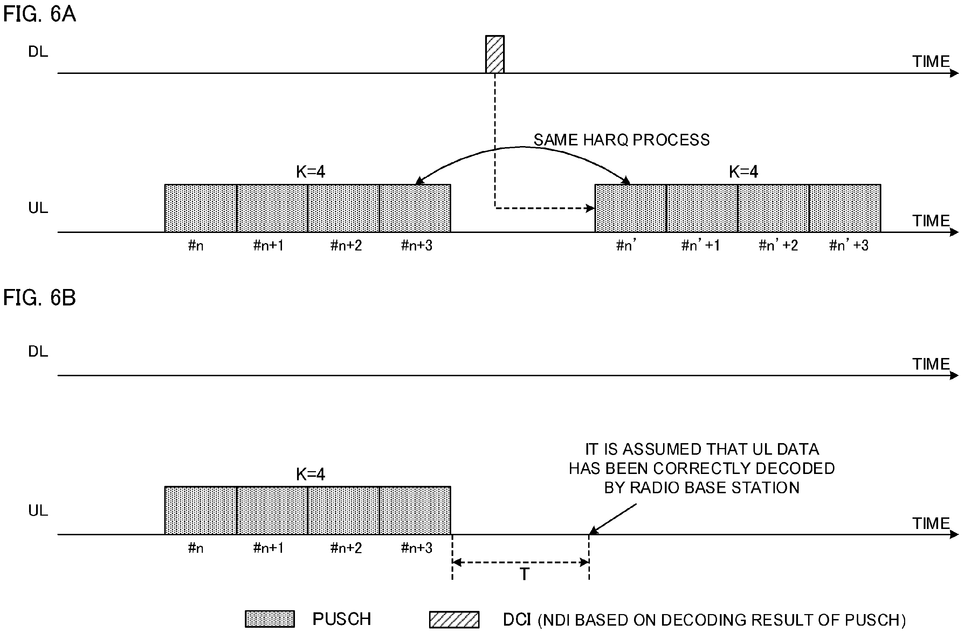

According to the first type, when repeatedly transmitting the PUSCH a given number of times without scheduling based on the DCI, the user terminal may control retransmission of the PUSCH based on a DL signal indicating ACK or NACK of the PUSCH (Fig. 6A) or control retransmission of the PUSCH based on a given timer (Fig. 6B).

In this regard, the DL signal may be DCI (also referred to as a UL grant) that is specific to the user terminal or DCI (also referred to as group DCI) that is common between one or more user terminals. The DCI indicating ACK may include the HPN identical to that during initial transmission, and the NDI indicating new data. On the other hand, the DCI indicating NACK may include the HPN identical to that during initial transmission, and an NDI indicating retransmission data. Alternatively, the DL signal may be a signal, information or a channel provided for ACK or NACK in addition to the DCI.

Fig. 6 is a diagram illustrating one example of control of repeated transmission of the first type according to the third aspect. Figs. 6A and 6B illustrate a case of K = 4, and assume that the user terminal repeatedly transmits the PUSCH by using a given HARQ process and/or a resource in K (K = 4 in this case) contiguous slots #n to #n+3 without a UL grant from a radio base station.

Fig. 6A illustrates one example of retransmission control of the PUSCH based on a DL signal from the radio base station. As illustrated in Fig. 6A, the user terminal repeatedly transmits the PUSCH in the slots #n to #n+3 without the UL grant. The radio base station generates and transmits the DL signal (e.g., UL grant) indicating ACK or NACK based on a decoding result of the PUSCH.

In, for example, Fig. 6A, when receiving the DL signal indicating ACK (e.g., the UL grant including the HPN identical to that in the slot #n, and the NDI indicating new data), the user terminal repeatedly transmits a new PUSCH in a slot #n' based on the DL signal. On the other hand, when receiving the DL signal indicating NACK (e.g., the UL grant including the HPN identical to that in the slot #n, and the NDI indicating retransmission data), the user terminal may retransmit in the slot #n' the PUSCH identical to that in the slot #n based on the DL signal.

Fig. 6B illustrates one example of retransmission control of the PUSCH based on a given timer. In Fig. 6B, a timer that defines a given time T may be defined. When the timer expires and when retransmission of the PUSCH is not scheduled in the same HARQ process (i.e., when the DCI including the identical HPN and the NDI indicating the retransmission data is not received), the user terminal may assume that the PUSCH has been correctly decoded by the radio base station. In this case, the user terminal may flash the PUSCH stored in a buffer.

On the other hand, when retransmission of the PUSCH is scheduled in the same HARQ process before the timer that defines the given time T expires in Fig. 6B (i.e., when the DCI including the identical HPN and the NDI indicating retransmission data is received), the user terminal may assume that the PUSCH is not correctly decoded by the radio base station. In this case, the user terminal may retransmit the PUSCH.

According to the first type, when the user terminal repeatedly transmits the PUSCH a given number of times without scheduling based on the DCI, it is possible to appropriately control retransmission of the PUSCH based on the DL signal indicating ACK or NACK of the PUSCH or based on the given timer.

### <Second Type>

According to the second type, even when the radio base station succeeds in decoding the PUSCH even while the user terminal repeatedly transmits a PUSCH, the radio base station transmits an ACK signal/information/channel of the PUSCH. In this regard, the ACK signal/information/channel is as described in the second type of the second aspect.

A timing for feedback of the ACK signal/information/channel (also referred to as a feedback timing and an HARQ-ACK timing) and/or a resource may be based on the successfully decoded PUSCH in a certain slot. The radio base station may determine the HARQ-ACK timing/resource of the PUSCH based on the correctly decoded PUSCH.

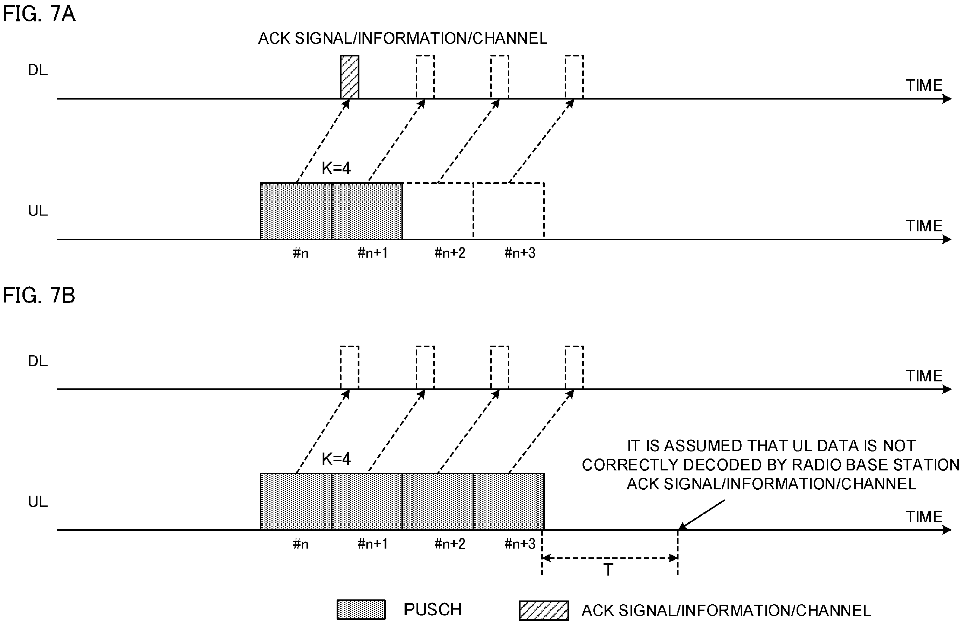

Fig. 7 is a diagram illustrating one example of control of repeated transmission of the second type according to the third aspect. Fig. 7 illustrates a case of K = 4, and assumes that the user terminal repeatedly transmits the PUSCH by using a given HARQ process and/or a resource in K (K = 4 in this case) contiguous slots #n to #n+3 without a UL grant from the radio base station. Differences from those in Fig. 6 will be mainly described below.

Fig. 7A illustrates one example of a case where decoding of the PUSCHs succeeds during repeated transmission of the PUSCH. As illustrated in Fig. 7A, when succeeding in decoding the PUSCH in the slot #n, the radio base station transmits the ACK signal/information/channel of the PUSCH without waiting for repeated transmission to end. The feedback timing of the ACK signal/information/channel may be determined based on the PUSCH. Furthermore, when DCI (a UL grant or group DCI) is used as the ACK signal/information/channel, the DCI may include the HPN identical to that in the slot #n, and the NDI indicating new data.

When receiving the ACK signal/information/channel from the radio base station during repeated transmission of the PUSCH (during transmission of the PUSCH in the slot #n+1), the user terminal stops subsequent repeated transmission (repeated transmission of the PUSCH in the slots #n+2 and to #n+3 in this case).

Fig. 7B illustrates one example of a case where decoding of the PUSCH does not succeed during repeated transmission of the PUSCH. As illustrated in Fig. 7B, even when failing in decoding the PUSCH in each of the slots #n to #n+3, the radio base station does not transmit a signal, information or a channel indicating NACK of the PUSCH.

In Fig. 7B, the user terminal may activate the timer that defines the given time T after K times repeated transmission of the PUSCH. To determine whether or not the PUSCH has been correctly decoded by the radio base station, the user terminal expects to receive the ACK signal/information/channel from the radio base station before the timer expires. On the other hand, as illustrated in Fig. 7B, when the user terminal does not receive the ACK signal/information/channel even after the timer expires, the user terminal may assume that the radio base station has failed in decoding the PUSCH, and stop flashing the buffer.

When K times repeated transmission of the PUSCH is finished while the PUSCH cannot be correctly decoded, the radio base station may reschedule the PUSCH in the same HARQ process (i.e., may transmit the DCI including the same HPN and the NDI indicating retransmission data).

According to the second type, the user terminal stops subsequent repeated transmission according to the ACK signal/information/channel from the radio base station, so that it is possible to reduce resource consumption caused by repeated transmission of the PUSCH that the radio base station has succeeded in decoding.

### (Fourth Aspect)

The fourth aspect will describe decision on a type of control (a control type such as the first type or the second type according to the above first to third aspects) of repeated transmission of a PDSCH and/or a PUSCH.

In the above first to third aspects, information indicating a periodicity (monitoring periodicity) P for monitoring DCI (at least one of a DL assignment, a UL grant and group DCI) for scheduling a PDSCH and/or a PUSCH in the same HARQ process may be configured to a user terminal by higher layer signaling. Furthermore, the number of times of repetition K of the PDSCH and/or the PUSCH may be configured to the user terminal by higher layer signaling.

The user terminal may determine the control type (e.g., the above first type or second type) of repeated transmission of the PDSCH and/or the PUSCH based on the above monitoring periodicity P and number of times repetition K. When, for example, the monitoring periodicity P is a duration or more derived based on the number of times of repetition K, the user terminal may assume that repeated transmission is controlled according to the first type. On the other hand, when the monitoring periodicity P is less than the duration derived based on the number of times of repetition K, the user terminal may assume that repeated transmission is controlled according to the second type.

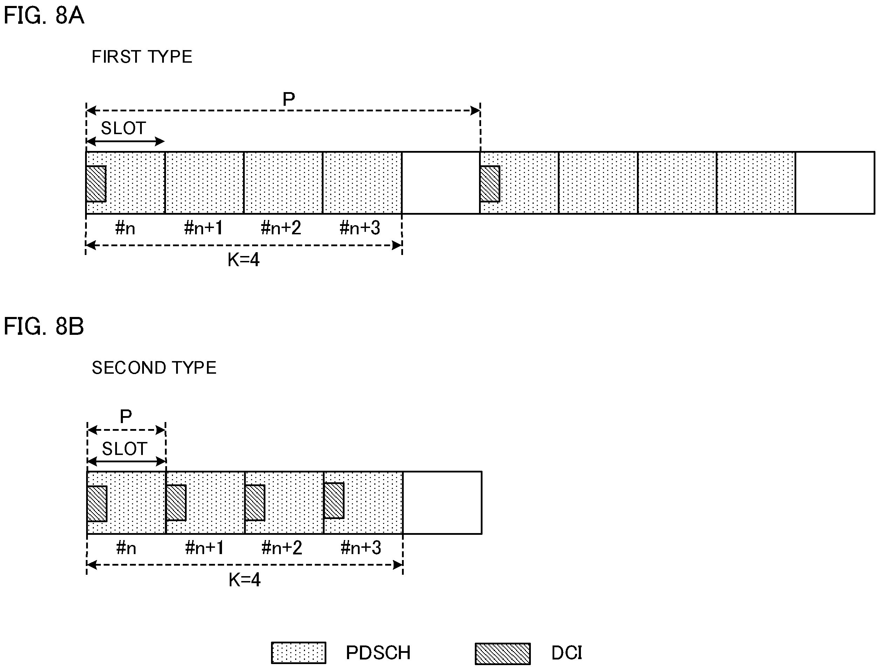

Fig. 8 is a diagram illustrating one example of decision on the control type of repeated transmission according to the fourth aspect. As illustrated in Fig. 8A, when the monitoring periodicity P (P = 5 slots in this case) of the DCI is a duration (4 slots in this case) or more derived based on the number of times of repetition K of the PDSCH, the user terminal may assume that repeated transmission of the PDSCH is controlled according to the first type.

On the other hand, as illustrated in Fig. 8B, when the monitoring periodicity P (P = 1 slot in this case) of the DCI is less than a duration (4 slots in this case) derived based on the number of times of repetition K of the PDSCH, the user terminal may assume that repeated transmission of the PDSCH is controlled according to the second type.

Figs. 8A and 8B illustrate repeated transmission of the PDSCH. However, the same decision is applicable to a control type of repeated transmission of the PUSCH, too. Furthermore, when repeated transmission of the PUSCH is performed without a UL grant, the user terminal may start monitoring the DCI in the above monitoring periodicity P after start of repetition.

According to the fourth aspect, the user terminal can recognize the control type of repeated transmission of the PDSCH and/or the PUSCH without explicit signaling.

### (Radio Communication System)

The configuration of the radio communication system according to the present embodiment will be described below. This radio communication system is applied the radio communication method according to each of the above aspects. In addition, the radio communication method according to each of the above aspects may be each applied alone or may be applied in combination.

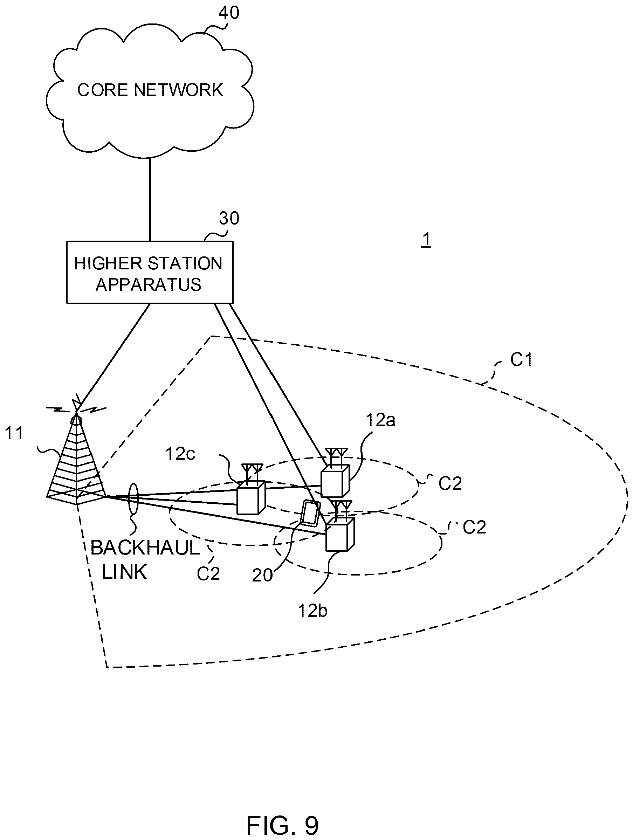

Fig. 9 is a diagram illustrating one example of a schematic configuration of the radio communication system according to the present embodiment. A radio communication system 1 can apply Carrier Aggregation (CA) and/or Dual Connectivity (DC) that aggregate a plurality of base frequency blocks (component carriers) whose 1 unit is a system bandwidth (e.g., 20 MHz) of the LTE system. In this regard, the radio communication system 1 may be referred to as SUPER 3G LTE-Advanced (LTE-A), IMT-Advanced, 4G, 5G, Future Radio Access (FRA) and New-RAT (NR).

The radio communication system 1 illustrated in Fig. 9 includes a radio base station 11 that forms a macro cell C1, and radio base stations 12a to 12c that are located in the macro cell C1 and form small cells C2 narrower than the macro cell C1. Furthermore, a user terminal 20 is located in the macro cell C1 and each small cell C2. Different numerologies may be configured to be applied between cells. In this regard, the numerology may be at least one of a subcarrier-spacing, a symbol length, a Cyclic Prefix (CP) length, the number of symbols per Transmission Time Interval (TTI) and a time duration of the TTI. Furthermore, the slot may be a time unit based on the numerologies applied by the user terminal. The number of symbols per slot may be defined according to the subcarrier-spacing.

The user terminal 20 can connect with both of the radio base station 11 and the radio base stations 12. The user terminal 20 is assumed to concurrently use the macro cell C1 and the small cells C2 that use different frequencies by CA or DC. Furthermore, the user terminal 20 can apply CA or DC by using a plurality of cells (CCs) (e.g., two or more CCs). Furthermore, the user terminal can use licensed band CCs and unlicensed band CCs as a plurality of cells.

Furthermore, the user terminal 20 can perform communication by using Time Division Duplex (TDD) or Frequency Division Duplex (FDD) in each cell. A TDD cell and an FDD cell may be each referred to as a TDD carrier (frame configuration second type) and an FDD carrier (frame configuration first type).

Furthermore, each cell (carrier) may be applied a slot (also referred to as a TTI, a general TTI, a long TTI, a general subframe, a long subframe or a subframe) having a relatively long time duration (e.g., 1 ms), and/or a slot (also referred to as a mini slot, a short TTI or a short subframe) having a relatively short time duration. Furthermore, in each cell. a slot of 2 or more time durations may be applied.

The user terminal 20 and the radio base station 11 can communicate by using a carrier (referred to as a Legacy carrier) of a narrow bandwidth in a relatively low frequency band (e.g., 2 GHz). On the other hand, the user terminal 20 and each radio base station 12 may use a carrier of a wide bandwidth in a relatively high frequency band (e.g., 3.5 GHz, 5 GHz or 30 to 70 GHz) or may use the same carrier as that used between the user terminal 20 and the radio base station 11. In this regard, a configuration of the frequency band used by each radio base station is not limited to this.

The radio base station 11 and each radio base station 12 (or the two radio base stations 12) can be configured to be connected by way of wired connection (e.g., optical fibers compliant with a Common Public Radio Interface (CPRI) or an X2 interface) or by way of radio connection.

The radio base station 11 and each radio base station 12 are each connected with a higher station apparatus 30 and connected with a core network 40 via the higher station apparatus 30. In this regard, the higher station apparatus 30 includes, for example, an access gateway apparatus, a Radio Network Controller (RNC) and a Mobility Management Entity (MME), yet is not limited to these. Furthermore, each radio base station 12 may be connected with the higher station apparatus 30 via the radio base station 11.

In this regard, the radio base station 11 is a radio base station that has a relatively wide coverage, and may be referred to as a macro base station, an aggregate node, an eNodeB (eNB) or a transmission/reception point. Furthermore, each radio base station 12 is a radio base station that has a local coverage, and may be referred to as a small base station, a micro base station, a pico base station, a femto base station, a Home eNodeB (HeNB), a Remote Radio Head (RRH) or a transmission/reception point. The radio base stations 11 and 12 will be collectively referred to as a radio base station 10 below when not distinguished.

Each user terminal 20 is a terminal that supports various communication schemes such as LTE and LTE-A, and may include not only a mobile communication terminal but also a fixed communication terminal. Furthermore, the user terminal 20 can perform device-to-device communication (D2D) with the other user terminal 20.

The radio communication system 1 applies Orthogonal Frequency-Division Multiple Access (OFDMA) to Downlink (DL) and Single Carrier-Frequency Division Multiple Access (SC-FDMA) to Uplink (UL) as radio access schemes. OFDMA is a multicarrier transmission scheme that divides a frequency band into a plurality of narrow frequency bands (subcarriers) and maps data on each subcarrier to perform communication. SC-FDMA is a single carrier transmission scheme that divides a system bandwidth into a band including one or contiguous resource blocks per terminal and causes a plurality of terminals to use respectively different bands to reduce an inter-terminal interference. In this regard, uplink and downlink radio access schemes are not limited to a combination of these, and OFDMA may be used on UL. Furthermore, SC-FDMA is applicable to Sidelink (SL) used for device-to-device communication.

The radio communication system 1 uses a DL data channel (also referred to as a PDSCH: Physical Downlink Shared Channel or a DL shared channel) shared by each user terminal 20, a broadcast channel (PBCH: Physical Broadcast Channel) and an L1/L2 control channel as DL channels. DL data (at least one of user data, higher layer control information and System Information Blocks (SIBs)) is conveyed on the PDSCH. Furthermore, Master Information Blocks (MIBs) are conveyed on the PBCH.

The L1/L2 control channel includes a DL control channel (a Physical Downlink Control Channel (PDCCH) and/or an Enhanced Physical Downlink Control Channel (EPDCCH)), a Physical Control Format Indicator Channel (PCFICH), and a Physical Hybrid-ARQ Indicator Channel (PHICH). Downlink Control Information (DCI) including scheduling information of the PDSCH and the PUSCH is conveyed on the PDCCH. The number of OFDM symbols used for the PDCCH is conveyed on the PCFICH. The EPDCCH is subjected to frequency division multiplexing with the PDSCH and is used to convey DCI similar to the PDCCH. Transmission acknowledgement information (also referred to as, for example, A/N, HARQ-ACK, HARQ-ACK bits or an A/N codebook) for the PUSCH can be conveyed on the PHICH.

The radio communication system 1 uses a UL data channel (also referred to as a PUSCH: Physical Uplink Shared Channel or a UL shared channel) shared by each user terminal 20, a UL control channel (PUCCH: Physical Uplink Control Channel), and a random access channel (PRACH: Physical Random Access Channel) as UL channels. UL data (user data and/or higher layer control information) is conveyed on the PUSCH. Uplink Control Information (UCI) including at least one of transmission acknowledgement information (A/N or HARQ-ACK) and Channel State Information (CSI) of the PDSCH is conveyed on the PUSCH or the PUCCH. A random access preamble for establishing connection with a cell can be conveyed on the PRACH.

### <Radio Base Station>

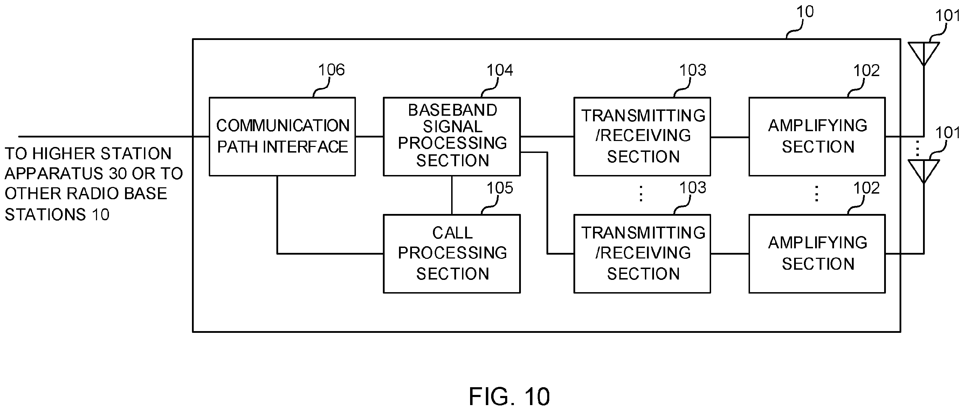

Fig. 10 is a diagram illustrating one example of an overall configuration of the radio base station according to the present embodiment. The radio base station 10 includes pluralities of transmission/reception antennas 101, amplifying sections 102 and transmission/reception sections 103, a baseband signal processing section 104, a call processing section 105 and a channel interface 106. In this regard, the radio base station 10 only needs to be configured to include one or more of each of the transmission/reception antennas 101, the amplifying sections 102 and the transmission/reception sections 103. The radio base station 10 may configure a "reception apparatus" on UL, and configure a "transmission apparatus" on DL.

DL data transmitted from the radio base station 10 to the user terminal 20 on DL is input from the higher station apparatus 30 to the baseband signal processing section 104 via the channel interface 106.

The baseband signal processing section 104 performs processing of a Packet Data Convergence Protocol (PDCP) layer, segmentation and concatenation of the DL data, transmission processing of a Radio Link Control (RLC) layer such as RLC retransmission control, Medium Access Control (MAC) retransmission control (e.g., Hybrid Automatic Repeat reQuest (HARQ) processing), and transmission processing such as at least one of scheduling, transmission format selection, channel coding, rate matching, scrambling, Inverse Fast Fourier Transform (IFFT) processing, and precoding processing on the DL data signal, and transfers the DL data signal to each transmission/reception section 103. Furthermore, the baseband signal processing section 104 performs transmission processing such as channel coding and/or inverse fast Fourier transform on a DL control signal, too, and transfers the DL control signal to each transmission/reception section 103.

Each transmission/reception section 103 converts a baseband signal precoded and output per antenna from the baseband signal processing section 104 into a radio frequency band, and transmits a radio frequency signal. The radio frequency signal subjected to frequency conversion by each transmission/reception section 103 is amplified by each amplifying section 102, and is transmitted from each transmission/reception antenna 101.

The transmission/reception sections 103 can be composed of transmitters/receivers, transmission/reception circuits or transmission/reception apparatuses described based on a common knowledge in a technical field according to the present invention. In this regard, the transmission/reception sections 103 may be composed as an integrated transmission/reception section or may be composed of transmission sections and reception sections.

Meanwhile, each amplifying section 102 amplifies a radio frequency signal received by each transmission/reception antenna 101 as a UL signal. Each transmission/reception section 103 receives the UL signal amplified by each amplifying section 102. Each transmission/reception section 103 performs frequency conversion on the received signal into a baseband signal, and outputs the baseband signal to the baseband signal processing section 104.

The baseband signal processing section 104 performs Fast Fourier Transform (FFT) processing, Inverse Discrete Fourier Transform (IDFT) processing, error correcting decoding, reception processing of MAC retransmission control, and reception processing of an RLC layer and a PDCP layer on UL data included in the input UL signal, and transfers the UL data to the higher station apparatus 30 via the channel interface 106. The call processing section 105 performs at least one of call processing such as configuration and release of a communication channel, state management of the radio base station 10, and radio resource management.

The channel interface 106 transmits and receives signals to and from the higher station apparatus 30 via a given interface. Furthermore, the channel interface 106 may transmit and receive (backhaul signaling) signals to and from the neighboring radio base station 10 via an inter-base station interface (e.g., optical fibers compliant with the Common Public Radio Interface (CPRI) or the X2 interface).

Furthermore, each transmission/reception section 103 transmits a DL signal (e.g., at least one of a DL control signal (also referred to as a DL control channel or DCI), a DL data signal (also referred to as a DL data channel or DL data) and a reference signal). Furthermore, each transmission/reception section 103 receives a UL signal (e.g., at least one of a UL control signal (also referred to as a UL control channel or UCI), a UL data signal (also referred to as a UL data channel or UL data) and a reference signal).

More specifically, each transmission/reception section 103 may repeatedly transmit a DL data signal (e.g., PDSCH) a given number of times. Furthermore, each transmission/reception section 103 may repeatedly receive a UL data signal (e.g., PUSCH) a given number of times.

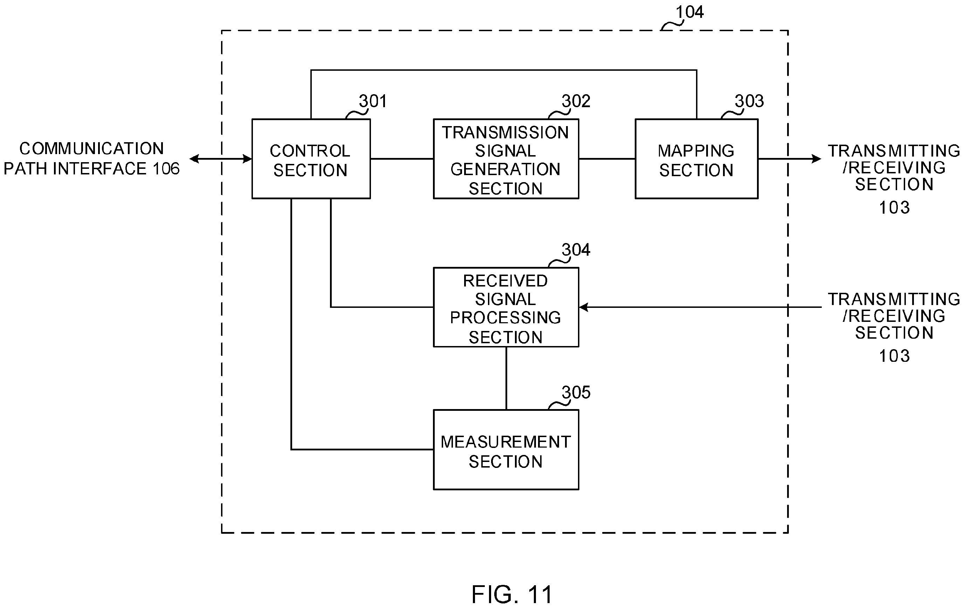

Fig. 11 is a diagram illustrating one example of a function configuration of the radio base station according to the present embodiment. In addition, Fig. 11 mainly illustrates function blocks of characteristic portions according to the present embodiment, and assumes that the radio base station 10 includes other function blocks, too, that are necessary for radio communication. As illustrated in Fig. 11, the baseband signal processing section 104 includes a control section 301, a transmission signal generating section 302, a mapping section 303, a received signal processing section 304 and a measurement section 305.

The control section 301 controls the entire radio base station 10. The control section 301 controls at least one of, for example, DL signal generation of the transmission signal generating section 302, DL signal mapping of the mapping section 303, UL signal reception processing (e.g., demodulation) of the received signal processing section 304, and measurement of the measurement section 305.

Furthermore, the control section 301 may control scheduling of a data signal (including a DL data signal and/or a UL data signal). More specifically, the control section 301 may control scheduling of a data signal to be repeatedly transmitted a given number of times.

Furthermore, the control section 301 may control repeated transmission of the DL data based on transmission acknowledgement information generated based on a decoding result of the DL data signal (first aspect). For example, the control section 301 may control retransmission of the DL data signal based on ACK or NACK fed back from the user terminal 20 at a timing indicated by DCI (the first aspect, the first type or Fig. 1).

Alternatively, the control section 301 may control retransmission of the DL data signal based on ACK fed back from the user terminal 20 at a timing determined based on a successfully decoded DL data signal (the first aspect, the second type and Fig. 2). Furthermore, the control section 301 may stop subsequent repeated transmission of a subsequent DL data signal depending on a timing at which the ACK is received (the first aspect, the second type and Fig. 3).

Furthermore, the control section 301 may control generation and/or transmission of a DL signal based on the decoding result of the UL data signal (the second and third aspects). The DL signal may be DCI including an HPN and an NDI, or an ACK or NACK signal, information or a channel provided separately from the DCI.

The control section 301 may control generation and/or transmission of DCI including the NDI based on the decoding result of the UL data signal after a given number of times of repeated transmission, and the HPN identical to that of the UL data signal (the second and third aspects, the first type and Figs. 4 and 6A).

The control section 301 may control generation and/or transmission of a DL signal indicating that decoding of the UL data signal has succeeded (the second and third aspects, the second type and Figs. 5 and 7).

The control section 301 may determine a control type (e.g., the first type or the second type) of repeated transmission of the data signal based on the monitoring periodicity P of the DCI and the number of times of repetition K of the data signal (fourth aspect).

The control section 301 can be composed of a controller, a control circuit or a control apparatus described based on the common knowledge in the technical field according to the present invention.

The transmission signal generating section 302 may generate the above DL signal based on an instruction from the control section 301, and output the DL signal to the mapping section 303. The transmission signal generating section 302 can be composed of a signal generator, a signal generating circuit or a signal generating apparatus described based on the common knowledge in the technical field according to the present invention.

The mapping section 303 maps the DL signal generated by the transmission signal generating section 302, on a given radio resource based on the instruction from the control section 301, and outputs the DL signal to each transmission/reception section 103. The mapping section 303 can be composed of a mapper, a mapping circuit or a mapping apparatus described based on the common knowledge in the technical field according to the present invention.

The received signal processing section 304 performs reception processing (e.g., demapping, demodulation and decoding) on a UL signal transmitted from the user terminal 20. The received signal processing section 304 can be composed of a signal processor, a signal processing circuit or a signal processing apparatus described based on the common knowledge in the technical field according to the present invention. Furthermore, the received signal processing section 304 can configure a reception section according to the present invention.

The measurement section 305 may measure UL channel quality based on, for example, received power (e.g., Reference Signal Received Power (RSRP)) and/or received quality (e.g., Reference Signal Received Quality (RSRQ)) of a reference signal. The measurement section 305 may output a measurement result to the control section 301.

### <User Terminal>

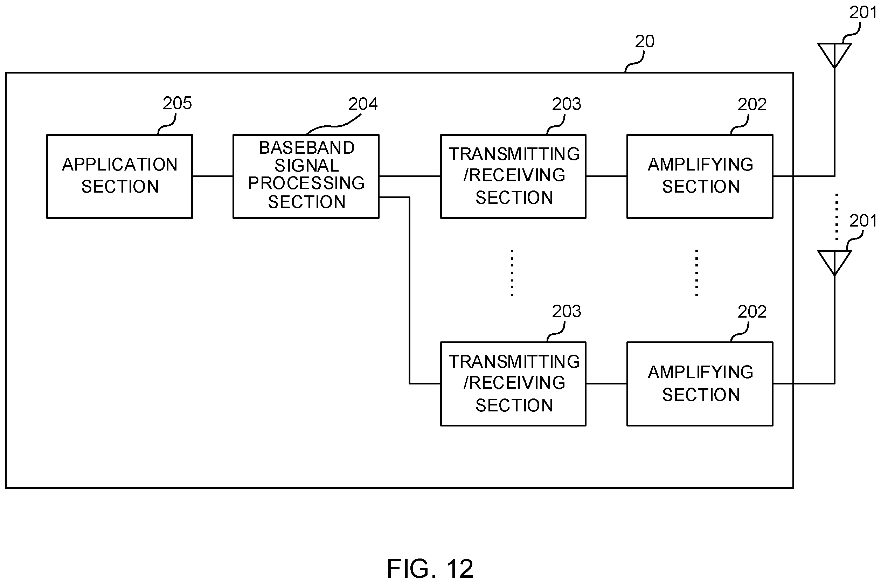

Fig. 12 is a diagram illustrating one example of an overall configuration of the user terminal according to the present embodiment. The user terminal 20 includes pluralities of transmission/reception antennas 201 for MIMO transmission, amplifying sections 202 and transmission/reception sections 203, a baseband signal processing section 204 and an application section 205. The user terminal 20 may configure a "transmission apparatus" on UL, and configure a "reception apparatus" on DL.

The respective amplifying sections 202 amplify radio frequency signals received at a plurality of transmission/reception antennas 201. Each transmission/reception section 203 receives a DL signal amplified by each amplifying section 202. Each transmission/reception section 203 performs frequency conversion on the received signal into a baseband signal, and outputs the baseband signal to the baseband signal processing section 204.

The baseband signal processing section 204 performs at least one of FFT processing, error correcting decoding, and reception processing of retransmission control on the input baseband signal. The baseband signal processing section 204 transfers DL data to the application section 205. The application section 205 performs processing related to layers higher than a physical layer and an MAC layer.

On the other hand, the application section 205 inputs UL data to the baseband signal processing section 204. The baseband signal processing section 204 performs at least one of retransmission control processing (e.g., HARQ processing), channel coding, rate matching, puncturing, Discrete Fourier Transform (DFT) processing and IFFT processing on the UL data, and transfers the UL data to each transmission/reception section 203. The baseband signal processing section 204 performs at least one of channel coding, rate matching, puncturing, DFT processing and IFFT processing on UCI (e.g., at least one of A/N of a DL signal, Channel State Information (CSI) and a Scheduling Request (SR)), too, and transfers the UCI to each transmission/reception section 203.

Each transmission/reception section 203 converts the baseband signal output from the baseband signal processing section 204 into a radio frequency band, and transmits a radio frequency signal. The radio frequency signal subjected to the frequency conversion by each transmission/reception section 203 is amplified by each amplifying section 202, and is transmitted from each transmission/reception antenna 201.

Furthermore, each transmission/reception section 203 receives a DL signal (e.g., at least one of a DL control signal (also referred to as a DL control channel or DCI), a DL data signal (also referred to as a DL data channel or DL data) and a reference signal). Furthermore, each transmission/reception section 203 transmits a UL signal (e.g., at least one of a UL control signal (also referred to as a UL control channel or UCI), a UL data signal (also referred to as a UL data channel or UL data) and a reference signal).

More specifically, each transmission/reception section 203 may repeatedly receive a DL data signal (e.g., PDSCH) a given number of times. Furthermore, each transmission/reception section 203 may repeatedly transmit a UL data signal (e.g., PUSCH) a given number of times.

The transmission/reception sections 203 can be composed of transmitters/receivers, transmission/reception circuits or transmission/reception apparatuses described based on the common knowledge in the technical field according to the present invention. Furthermore, the transmission/reception sections 203 may be composed as an integrated transmission/reception section or may be composed of transmission sections and reception sections.

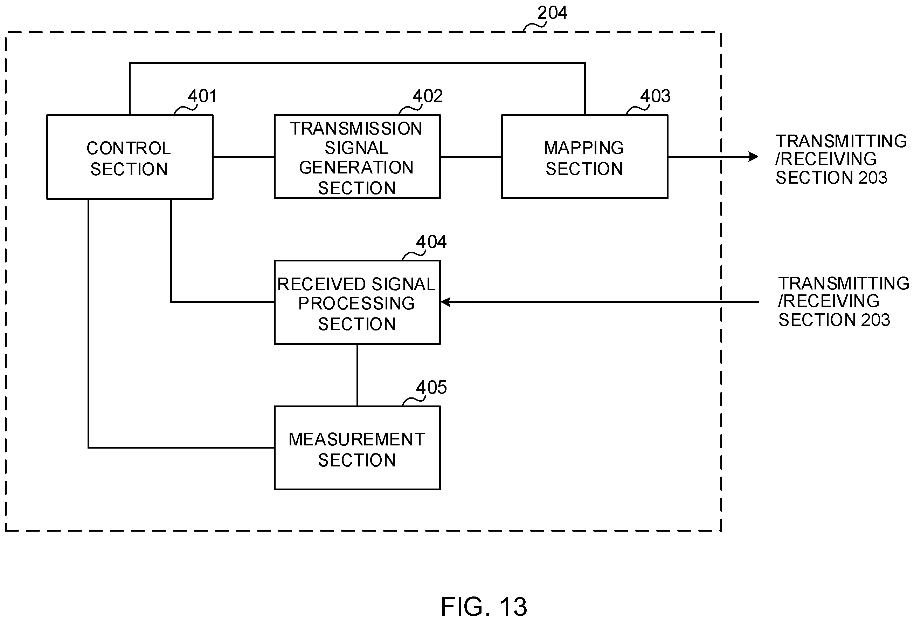

Fig. 13 is a diagram illustrating one example of a function configuration of the user terminal according to the present embodiment. In addition, Fig. 13 mainly illustrates function blocks of characteristic portions according to the present embodiment, and assumes that the user terminal 20 includes other function blocks, too, that are necessary for radio communication. As illustrated in Fig. 13, the baseband signal processing section 204 of the user terminal 20 includes a control section 401, a transmission signal generating section 402, a mapping section 403, a received signal processing section 404 and a measurement section 405.

The control section 401 controls the entire user terminal 20. The control section 401 controls at least one of, for example, UL signal generation of the transmission signal generating section 402, UL signal mapping of the mapping section 403, DL signal reception processing of the received signal processing section 404, and measurement of the measurement section 405.

More specifically, the control section 401 may monitor (blind-decode) the DL control signal, and detect DCI (e.g., at least one of a UL grant, a DL assignment and group DCI) for the user terminal 20.

The control section 401 may control reception of a DL data signal that is repeatedly transmitted a given number of times based on the DCI (first aspect). Furthermore, the control section 401 may control generation and/or transmission of transmission acknowledgement information based on a decoding result of the DL data signal (first aspect). The transmission acknowledgement information may indicate ACK or NACK (first type) or may indicate only ACK (second type).

The control section 401 may determine a timing and/or a resource (HARQ-ACK timing/resource) for feeding back transmission acknowledgement information indicating the decoding result (ACK or NACK) of the DL data signal after a given number of times of repeated transmission, based on the DCI (the first aspect, the first type and Fig. 1).

Furthermore, the control section 401 may determine a timing and/or a resource (HARQ-ACK timing/resource) for feeding back transmission acknowledgement information indicating that decoding of the DL data signal has succeeded (ACK) based on the successfully decoded DL data signal (the first aspect, the second type and Fig. 2).

Furthermore, the control section 401 may control repeated transmission of the UL data signal based on the DCI (second aspect). Furthermore, the control section 401 may control repeated transmission of the UL data signal without scheduling based on the DCI (third aspect). Furthermore, the control section 401 may control repeated transmission of the UL data signal based on the DL signal generated based on the decoding result of the UL data signal (second and third aspects).

For example, the DL signal may be DCI indicating the HPN identical to that of the UL data signal. When receiving the DCI after transmitting the UL data signal a given number of times, the control section 401 may control repeated transmission of the UL data signal based on an NDI included in the DCI (the second and third aspects, the first type and Figs. 4 and 6A).

Furthermore, when not receiving the DCI within a given duration after repeatedly transmitting the UL data signal a given number of times, the control section 401 may assume that the UL data signal has been correctly decoded by the radio base station (the third aspect, the first type and Fig. 6B).

Furthermore, the DL signal may indicate that decoding of the UL data signal has succeeded. When receiving the DL signal before repeatedly transmitting the UL data signal a given number of times, the control section 401 may stop repeatedly transmitting the UL data signal (the second and third aspects, the second type and Figs. 5 and 7A).

Furthermore, when not receiving the DL signal within the given duration after repeatedly transmitting the UL data signal the given number of times, the control section 401 may assume that the UL data signal has not been correctly decoded by the radio base station (the third aspect, the second type and Fig. 7B).

The control section 401 may determine a control type (e.g., the first type or the second type) of repeated transmission of the data signal based on the monitoring periodicity P of the DCI and the number of times of repetition K of the data signal (fourth aspect).

The control section 401 can be composed of a controller, a control circuit or a control apparatus described based on the common knowledge in the technical field according to the present invention.

The transmission signal generating section 402 generates (e.g., encodes, rate-matches, punctures and modulates) the above UL signal based on an instruction from the control section 401, and outputs the UL signal to the mapping section 403. The transmission signal generating section 402 can be composed of a signal generator, a signal generating circuit or a signal generating apparatus described based on the common knowledge in the technical field according to the present invention.

The mapping section 403 maps the UL signal generated by the transmission signal generating section 402, on a radio resource based on the instruction from the control section 401, and outputs the UL signal to each transmission/reception section 203. The mapping section 403 can be composed of a mapper, a mapping circuit or a mapping apparatus described based on the common knowledge in the technical field according to the present invention.

The received signal processing section 404 performs reception processing (e.g., at least one of demapping, demodulation and decoding) on the above DL signal. The received signal processing section 404 can be composed of a signal processor, a signal processing circuit or a signal processing apparatus described based on the common knowledge in the technical field according to the present invention. Furthermore, the received signal processing section 404 can compose the reception section according to the present invention.

The measurement section 405 measures a channel state based on a reference signal (e.g., CSI-RS) from the radio base station 10, and outputs a measurement result to the control section 401. In addition, the measurement section 405 may measure the channel state per CC.

The measurement section 405 can be composed of a signal processor, a signal processing circuit or a signal processing apparatus, and a measurement instrument, a measurement circuit or a measurement apparatus described based on the common knowledge in the technical field according to the present invention.

### <Hardware Configuration>

In addition, the block diagrams used to describe the above embodiment illustrate blocks in function units. These function blocks (components) are realized by an optional combination of hardware and/or software. Furthermore, means for realizing each function block is not limited in particular. That is, each function block may be realized by one physically and/or logically coupled apparatus or may be realized by a plurality of these apparatuses formed by connecting two or more physically and/or logically separate apparatuses directly and/or indirectly (by way of, for example, wired connection and/or radio connection).

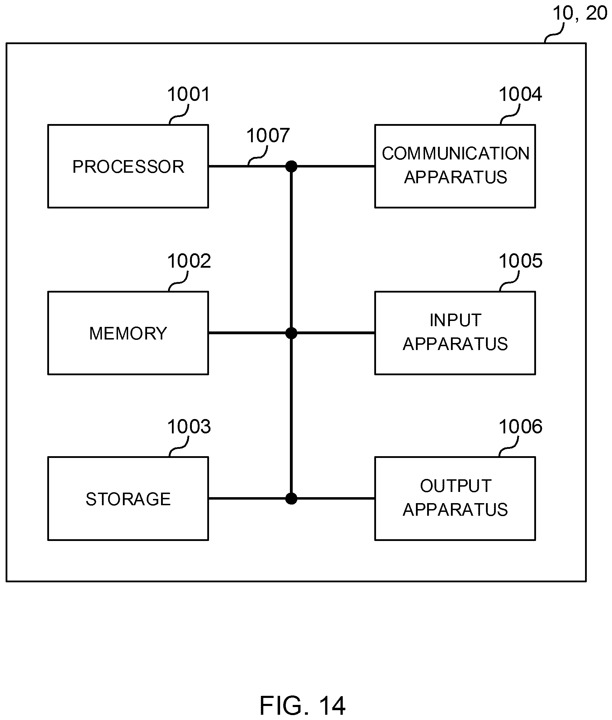

For example, the radio base station and the user terminal according to the present embodiment may function as computers that perform processing of the radio communication method according to the present invention. Fig. 14 is a diagram illustrating one example of the hardware configurations of the radio base station and the user terminal according to the present embodiment. The above radio base station 10 and user terminal 20 may be each physically configured as a computer apparatus that includes a processor 1001, a memory 1002, a storage 1003, a communication apparatus 1004, an input apparatus 1005, an output apparatus 1006 and a bus 1007.

In this regard, a word "apparatus" in the following description can be read as a circuit, a device or a unit. The hardware configurations of the radio base station 10 and the user terminal 20 may be configured to include one or a plurality of apparatuses illustrated in Fig. 14 or may be configured without including part of the apparatuses.

For example, Fig. 14 illustrates the only one processor 1001. However, there may be a plurality of processors. Furthermore, processing may be executed by one processor or processing may be executed by one or more processors concurrently, successively or by another method. In addition, the processor 1001 may be implemented by one or more chips.

Each function of the radio base station 10 and the user terminal 20 is realized by, for example, causing hardware such as the processor 1001 and the memory 1002 to read given software (program), and thereby causing the processor 1001 to perform an operation, and control communication of the communication apparatus 1004 and reading and writing of data in the memory 1002 and the storage 1003.

The processor 1001 causes, for example, an operating system to operate to control the entire computer. The processor 1001 may be composed of a Central Processing Unit (CPU) including an interface for a peripheral apparatus, a control apparatus, an operation apparatus and a register. For example, the above baseband signal processing section 104 (204) and call processing section 105 may be realized by the processor 1001.

Furthermore, the processor 1001 reads programs (program codes), a software module or data from the storage 1003 and/or the communication apparatus 1004 out to the memory 1002, and executes various types of processing according to these programs, software module or data. As the programs, programs that cause the computer to execute at least part of the operations described in the above embodiment are used. For example, the control section 401 of the user terminal 20 may be realized by a control program stored in the memory 1002 and operating on the processor 1001, and other function blocks may be also realized likewise.

The memory 1002 is a computer-readable recording medium, and may be composed of at least one of, for example, a Read Only Memory (ROM), an Erasable Programmable ROM (EPROM), an Electrically EPROM (EEPROM), a Random Access Memory (RAM) and other appropriate storage media. The memory 1002 may be referred to as a register, a cache or a main memory (main storage apparatus). The memory 1002 can store programs (program codes) and a software module that can be executed to carry out the radio communication method according to the one embodiment of the present invention.

The storage 1003 is a computer-readable recording medium, and may be composed of at least one of, for example, a flexible disk, a floppy (registered trademark) disk, a magnetooptical disk (e.g., a compact disk (Compact Disc ROM (CD-ROM)), a digital versatile disk and a Blu-ray (registered trademark) disk), a removable disk, a hard disk drive, a smart card, a flash memory device (e.g., a card, a stick or a key drive), a magnetic stripe, a database, a server and other appropriate storage media. The storage 1003 may be referred to as an auxiliary storage apparatus.

The communication apparatus 1004 is hardware (transmission/reception device) that performs communication between computers via a wired and/or radio network, and is also referred to as, for example, a network device, a network controller, a network card and a communication module. The communication apparatus 1004 may be configured to include a high frequency switch, a duplexer, a filter and a frequency synthesizer to realize, for example, Frequency Division Duplex (FDD) and/or Time Division Duplex (TDD). For example, the above transmission/reception antennas 101 (201), amplifying sections 102 (202), transmission/reception sections 103 (203) and channel interface 106 may be realized by the communication apparatus 1004.

The input apparatus 1005 is an input device (e.g., a keyboard, a mouse, a microphone, a switch, a button or a sensor) that accepts an input from an outside. The output apparatus 1006 is an output device (e.g., a display, a speaker or a Light Emitting Diode (LED) lamp) that sends an output to the outside. In addition, the input apparatus 1005 and the output apparatus 1006 may be an integrated component (e.g., touch panel).

Furthermore, each apparatus illustrated in Fig. 14 is connected by the bus 1007 that communicates information. The bus 1007 may be composed of a single bus or may be composed of buses that are different between apparatuses.

Furthermore, the radio base station 10 and the user terminal 20 may be configured to include hardware such as a microprocessor, a Digital Signal Processor (DSP), an Application Specific Integrated Circuit (ASIC), a Programmable Logic Device (PLD) and a Field Programmable Gate Array (FPGA). The hardware may realize part or all of each function block. For example, the processor 1001 may be implemented by at least one of these types of hardware.

### (Modified Example)

In addition, each term that has been described in this description and/or each term that is necessary to understand this description may be replaced with terms having identical or similar meanings. For example, a channel and/or a symbol may be signals (signaling). Furthermore, a signal may be a message. A reference signal can be also abbreviated as an RS (Reference Signal), or may be also referred to as a pilot or a pilot signal depending on standards to be applied. Furthermore, a Component Carrier (CC) may be referred to as a cell, a frequency carrier and a carrier frequency.

Furthermore, a radio frame may include one or a plurality of durations (frames) in a time-domain. Each of one or a plurality of durations (frames) that composes a radio frame may be referred to as a subframe. Furthermore, the subframe may include one or a plurality of slots in the time-domain. The subframe may be a fixed time duration (e.g., 1 ms) that does not depend on the numerologies.

The slot may include one or a plurality of symbols (Orthogonal Frequency Division Multiplexing (OFDM) symbols or Single Carrier-Frequency Division Multiple Access (SC-FDMA) symbols) in the time-domain. Furthermore, the slot may be a time unit based on the numerologies. Furthermore, the slot may include a plurality of mini slots. Each mini slot may include one or a plurality of symbols in the time-domain.

The radio frame, the subframe, the slot, the mini slot and the symbol each indicate a time unit for conveying signals. The other corresponding names may be used for the radio frame, the subframe, the slot, the mini slot and the symbol. For example, 1 subframe may be referred to as a Transmission Time Interval (TTI), a plurality of contiguous subframes may be referred to as TTIs, or 1 slot or 1 mini slot may be referred to as a TTI. That is, the subframe and/or the TTI may be a subframe (1 ms) according to legacy LTE, may be a duration (e.g., 1 to 13 symbols) shorter than 1 ms or may be a duration longer than 1 ms.

In this regard, the TTI refers to, for example, a minimum time unit of scheduling for radio communication. For example, in the LTE system, the radio base station performs scheduling for allocating radio resources (a frequency bandwidth and/or transmission power that can be used by each user terminal) in TTI units to each user terminal. In this regard, a definition of the TTI is not limited to this. The TTI may be a transmission time unit of a channel-coded data packet (transport block), or may be a processing unit of scheduling and/or link adaptation. In addition, when 1 slot or 1 mini slot is referred to as a TTI, 1 or more TTIs (i.e., 1 or more slots or 1 or more mini slots) may be a minimum time unit of scheduling. Furthermore, the number of slots (the number of mini slots) that compose a minimum time unit of the scheduling may be controlled.

The TTI having the time duration of 1 ms may be referred to as a general TTI (TTIs according to LTE Rel. 8 to 12), a normal TTI, a long TTI, a general subframe, a normal subframe or a long subframe. A TTI shorter than the general TTI may be referred to as a reduced TTI, a short TTI, a partial or fractional TTI, a reduced subframe or a short subframe.

Resource Blocks (RBs) are resource allocation units of the time-domain and the frequency-domain, and may include one or a plurality of contiguous subcarriers in the frequency-domain. Furthermore, the RB may include one or a plurality of symbols in the time-domain or may have the length of 1 slot, 1 mini slot, 1 subframe or 1 TTI. 1 TTI or 1 subframe may each include one or a plurality of resource blocks. In this regard, the RB may be referred to as a Physical Resource Block (PRB: Physical RB), a PRB pair or an RB pair.

Furthermore, the resource block may include one or a plurality of Resource Elements (REs). For example, 1 RE may be a radio resource domain of 1 subcarrier and 1 symbol.

In this regard, structures of the above radio frame, subframe, slot, mini slot and symbol are only exemplary structures. For example, configurations such as the number of subframes included in a radio frame, the number of slots per subframe or radio frame, the number of mini slots included in a slot, the number of symbols included in a slot or a mini slot, the number of subcarriers included in an RB, the number of symbols in a TTI, a symbol length and a Cyclic Prefix (CP) length can be variously changed.

Furthermore, the information and parameters described in this description may be expressed by absolute values, may be expressed by relative values with respect to given values or may be expressed by other corresponding information. For example, a radio resource may be instructed by a given index. Furthermore, numerical expressions that use these parameters may be different from those explicitly disclosed in this description.

Names used for parameters in this description are in no respect restrictive ones. For example, various channels (the Physical Uplink Control Channel (PUCCH) and the Physical Downlink Control Channel (PDCCH)) and information elements can be identified based on various suitable names. Therefore, various names assigned to these various channels and information elements are in no respect restrictive ones.

The information and the signals described in this description may be expressed by using one of various different techniques. For example, the data, the instructions, the commands, the information, the signals, the bits, the symbols and the chips mentioned in the above entire description may be expressed as voltages, currents, electromagnetic waves, magnetic fields or magnetic particles, optical fields or photons, or optional combinations of these.

Furthermore, the information and the signals can be output from a higher layer to a lower layer and/or from the lower layer to the higher layer. The information and the signals may be input and output via a plurality of network nodes.

The input and output information and signals may be stored in a specific location (e.g., memory) or may be managed by a management table. The information and signals to be input and output can be overwritten, updated or additionally written. The output information and signals may be deleted. The input information and signals may be transmitted to other apparatuses.

Notification of information is not limited to the aspects/embodiment described in this description and may be performed by other methods. For example, the information may be notified by physical layer signaling (e.g., Downlink Control Information (DCI) and Uplink Control Information (UCI)), higher layer signaling (e.g., Radio Resource Control (RRC) signaling, broadcast information (Master Information Blocks (MIBs) and System Information Blocks (SIBs)), and Medium Access Control (MAC) signaling), other signals or combinations of these.

In addition, the physical layer signaling may be referred to as Layer 1/Layer 2 (L1/L2) control information (L1/L2 control signal) or L1 control information (L1 control signal). Furthermore, the RRC signaling may be referred to as an RRC message, and may be, for example, an RRCConnectionSetup message or an RRCConnectionReconfiguration message. Furthermore, the MAC signaling may be notified by, for example, an MAC Control Element (MAC CE).

Furthermore, notification of given information (e.g., notification of "being X") may be made not only explicitly but also implicitly (by, for example, not notifying this given information or by notifying another information).

Decision may be made based on a value (0 or 1) expressed as 1 bit, may be made based on a boolean expressed as true or false or may be made by comparing numerical values (by, for example, making comparison with a given value).

Irrespectively of whether software is referred to as software, firmware, middleware, a microcode or a hardware description language or as other names, the software should be widely interpreted to mean a command, a command set, a code, a code segment, a program code, a program, a subprogram, a software module, an application, a software application, a software package, a routine, a subroutine, an object, an executable file, an execution thread, a procedure or a function.

Furthermore, software, commands and information may be transmitted and received via transmission media. When, for example, the software is transmitted from websites, servers or other remote sources by using wired techniques (e.g., coaxial cables, optical fiber cables, twisted pairs and Digital Subscriber Lines (DSL)) and/or radio techniques (e.g., infrared rays and microwaves), these wired techniques and/or radio techniques are included in a definition of the transmission media.

The terms "system" and "network" used in this description are compatibly used.

In this description, the terms "Base Station (BS)", "radio base station", "eNB", "gNB", "cell", "sector", "cell group", "carrier" and "component carrier" can be compatibly used. The base station is also referred to as a term such as a fixed station, a NodeB, an eNodeB (eNB), an access point, a transmission point, a reception point, a femtocell or a small cell in some cases.

The base station can accommodate one or a plurality of (e.g., three) cells (also referred to as sectors). When the base station accommodates a plurality of cells, an entire coverage area of the base station can be partitioned into a plurality of smaller areas. Each smaller area can provide communication service via a base station subsystem (e.g., indoor small base station (RRH: Remote Radio Head)). The term "cell" or "sector" indicates part or the entirety of the coverage area of the base station and/or the base station subsystem that provide communication service in this coverage.

In this description, the terms "Mobile Station (MS)", "user terminal", "User Equipment (UE)" and "terminal" can be compatibly used. The base station is also referred to as a term such as a fixed station, a NodeB, an eNodeB (eNB), an access point, a transmission point, a reception point, a femtocell or a small cell in some cases.

The mobile station is also referred to by a person skilled in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client or some other appropriate terms in some cases.

Furthermore, the radio base station in this description may be read as the user terminal. For example, each aspect/embodiment of the present invention may be applied to a configuration where communication between the radio base station and the user terminal is replaced with communication between a plurality of user terminals (D2D: Device-to-Device). In this case, the user terminal 20 may be configured to include the functions of the above radio base station 10. Furthermore, "uplink" and/or "downlink" may be read as a "side". For example, the uplink channel may be read as a side channel.

Similarly, the user terminal in this description may be read as the radio base station. In this case, the radio base station 10 may be configured to include the functions of the above user terminal 20.

In this description, specific operations performed by the base station are performed by an upper node of this base station depending on cases. Obviously, in a network including one or a plurality of network nodes including the base stations, various operations performed to communicate with a terminal can be performed by base stations, one or more network nodes (that are supposed to be, for example, Mobility Management Entities (MME) or Serving-Gateways (S-GW) yet are not limited to these) other than the base stations or a combination of these.

Each aspect/embodiment described in this description may be used alone, may be used in combination or may be switched and used when carried out. Furthermore, orders of the processing procedures, the sequences and the flowchart according to each aspect/embodiment described in this description may be rearranged unless contradictions arise. For example, the method described in this description presents various step elements in an exemplary order and is not limited to the presented specific order.

Each aspect/embodiment described in this description may be applied to Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), Future Radio Access (FRA), the New Radio Access Technology (New-RAT), New Radio (NR), New radio access (NX), Future generation radio access (FX), Global System for Mobile communications (GSM) (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other appropriate radio communication methods and/or next-generation systems that are expanded based on these systems.

The phrase "based on" used in this description does not mean "based only on" unless specified otherwise. In other words, the phrase "based on" means both of "based only on" and "based at least on".

Every reference to elements that use names such as "first" and "second" used in this description does not generally limit the quantity or the order of these elements. These names can be used in this description as a convenient method for distinguishing between two or more elements. Hence, the reference to the first and second elements does not mean that only two elements can be employed or the first element should precede the second element in some way.

The term "deciding (determining)" used in this description includes diverse operations in some cases. For example, "deciding (determining)" may be regarded to "decide (determine)" calculating, computing, processing, deriving, investigating, looking up (e.g., looking up in a table, a database or another data structure) and ascertaining. Furthermore, "deciding (determining)" may be regarded to "decide (determine)" receiving (e.g., receiving information), transmitting (e.g., transmitting information), input, output and accessing (e.g., accessing data in a memory). Furthermore, "deciding (determining)" may be regarded to "decide (determine)" resolving, selecting, choosing, establishing and comparing. That is, "deciding (determining)" may be regarded to "decide (determine)" some operation.

The words "connected" and "coupled" used in this description or every modification of these words can mean every direct or indirect connection or coupling between two or more elements, and can include that one or more intermediate elements exist between the two elements "connected" or "coupled" with each other. The elements may be coupled or connected physically, logically or by way of a combination of the physical and logical connections. It can be understood that, when used in this description, the two elements are "connected" or "coupled" with each other by using one or more electric wires, cables and/or printed electrical connection, and by using electromagnetic energy having wavelengths in radio frequency domains, microwave domains and/or (both of visible and invisible) light domains in some non-restrictive and non-comprehensive examples.

When the words "including" and "comprising" and modifications of these words are used in this description or the claims, these words intend to be comprehensive similar to the word "having". Furthermore, the word "or" used in this description or the claims intends not to be an exclusive OR.

The present invention has been described in detail above. However, it is obvious for a person skilled in the art that the present invention is not limited to the embodiment described in this description. The present invention can be carried out as modified and changed aspects without departing from the gist and the scope of the present invention defined by the recitation of the claims. Accordingly, the disclosure of this description intends for exemplary explanation, and does not have any restrictive meaning to the present invention.
Fig. 1
   SLOT
   SAME HARQ PROCESS
   TIME
   HARQ-ACK TIMING/RESOURCE
Fig. 2
   SLOT
   SAME HARQ PROCESS
   TIME
   HARQ-ACK TIMING/RESOURCE CANDIDATE
Fig. 3
   SLOT
   REPETITION STOPS
   TIME
   HARQ-ACK TIMING/RESOURCE CANDIDATE
Fig. 4
   TIME
   SAME HARQ PROCESS
   PUSCH TIMING/RESOURCE
   (TOGGLED NDI)
   (NDI BASED ON DECODING RESULT OF PUSCH)
Fig. 5
   UL GRANT
   ACK SIGNAL/INFORMATION/CHANNEL
   TIME
   PUSCH TIMING/RESOURCE
   (TOGGLED NDI)
Fig. 6A
   TIME
   SAME HARQ PROCESS
Fig. 6B
   TIME
   IT IS ASSUMED THAT UL DATA HAS BEEN CORRECTLY DECODED BY RADIO BASE STATION
   (NDI BASED ON DECODING RESULT OF PUSCH)
Fig. 7A
   ACK SIGNAL/INFORMATION/CHANNEL
   TIME
Fig. 7B
   TIME
   IT IS ASSUMED THAT UL DATA IS NOT CORRECTLY DECODED BY RADIO BASE STATION
   ACK SIGNAL/INFORMATION/CHANNEL
Fig. 8A
   FIRST TYPE
   SLOT
Fig. 8B
   SECOND TYPE
   SLOT

## Claims

1. A user terminal comprising:
a transmission section that repeatedly transmits an Uplink (UL) data signal a given number of times; and
a control section that controls repeated transmission of the UL data signal based on a Downlink (DL) signal generated based on a decoding result of the UL data signal.

2. The user terminal according to claim 1, wherein
the DL signal is Downlink Control Information (DCI) that indicates an HARQ Process Number (HPN) identical to that of the UL data signal, and
when receiving the DCI after transmitting the UL data signal the given number of times, the control section controls the repeated transmission of the UL data signal based on a New Data Indicator (NDI) included in the DCI.

3. The user terminal according to claim 2, wherein, when not receiving the DCI within a given duration after repeatedly transmitting the UL data signal the given number of times, the control section assumes that the UL data signal has been correctly decoded by a radio base station.

4. The user terminal according to claim 1, wherein
the DL signal indicates that decoding of the UL data signal has succeeded, and
when receiving the DL signal before repeatedly transmitting the UL data signal the given number of times, the control section stops the repeated transmission of the UL data signal.

5. The user terminal according to claim 4, wherein, when not receiving the DL signal within a given duration after repeatedly transmitting the UL data signal the given number of times, the control section assumes that the UL data signal is not correctly decoded by a radio base station.

6. A radio communication method comprising at a user terminal:
transmitting an Uplink (UL) data signal a given number of times; and
controlling the repeated transmission of the UL data signal based on a Downlink (DL) signal generated based on a decoding result of the UL data.
